# EUROPÄISCHE PATENTSCHRIFT

(11) **EP 1 381 502 B1**
(45) Veröffentlichungstag und Bekanntmachung des Hinweises auf die Patenterteilung: **09.02.2005**
(21) Anmeldenummer: 02730084.7
(22) Anmeldetag: 02.04.2002
(51) Int. Cl.: B29C 45/77

(54) **VERFAHREN ZUM FÜLLEN DER KAVITÄT EINES WERKZEUGES**
METHOD OF FILLING THE CAVITY OF A TOOL
PROCEDE POUR REMPLIR LA CAVITE D'UN MOULE

(30) Priorität: 05.04.2001 DE 10116998; 12.11.2001 DE 10155162
(43) Veröffentlichungstag der Anmeldung: 21.01.2004
(73) Patentinhaber: Priamus System Technologies AG, 8200 Schaffhausen (CH)
(72) Erfinder: FREY, Jürgen, 73230 Kirchheim/Teck (DE)
(74) Vertreter: Weiss, Peter, Dr.
(86) Internationale Anmeldenummer: PCT/EP2002/003609
(87) Internationale Veröffentlichungsnummer: WO 2002/081177

(56) Entgegenhaltungen:
- EP-A- 0 535 274
- DE-A- 3 801 216
- DE-A- 4 140 392
- DE-A- 19 803 352
- PATENT ABSTRACTS OF JAPAN vol. 11, no. 111 (M-578), 8. April 1987 (1987-04-08) & JP 61 255825 A (MITSUBISHI HEAVY IND LTD), 13. November 1986 (1986-11-13)

## Beschreibung

Die Erfindung betrifft ein Verfahren zum Füllen einer Kavität eines Werkzeuges zum Herstellen eines Formteiles aus einer Schmelze, insbesondere einer Kavität einer Spritzgiessmaschine, wobei die Schmelze unter Druck in die Kavität eingeführt und gegen Ende oder am Ende ihres Fliessweges unter Nachdruck gesetzt wird.

Zur Beeinflussung der Einheitlichkeit und der guten Qualität von Spritzgiessprodukten ist es bekannt, die Temperatur der Schmelze zu ermitteln. Bspw. wird gemäss der JP 61255825 die Temperatur der Schmelze oder die aktuell gemessene Temperatur der Form mit einer Vielzahl von vorgegebenen Temperaturwerten verglichen.

Beim Spritzgiessen oder beispielsweise auch beim Druckgiessen wird die Kavität in einem Werkzeug mit einer Schmelze, insbesondere aus Kunststoff, Metall oder einer Keramik, gefüllt. Dieser Einfüllvorgang geschieht so lange, bis die Kavität gefüllt ist, danach erfolgt ein Umschalten auf die sogenannte Nachdruckphase, in der vor allem auch ein Schwinden des Werkstoffes in der Kavität ausgeglichen wird.

Wichtig ist eine Bestimmung des Umschaltzeitpunktes von der Einfüll- zu der Nachdruckphase. Eine manuelle Optimierung ist schwierig und zeitaufwendig, weshalb sie in der Praxis nur selten korrekt durchgeführt wird.

Eine fixe Umschaltung vom Einspritzvorgang auf den Nachdruckvorgäng kann nicht auf prozessbedingte Schwankungen z.B. der Viskosität reagieren, was wiederum eine grosse Schwankung der Qualität der Formteile zur Folge hat.

Beispielsweise in der EP 0 707 936 A2 oder der US 5 993 704 werden verfahren zur Bestimmung des Umschaltzeitpunktes bei der Herstellung eines Spritzgussteils beschrieben. Sie dienen dazu, den Zeitpunkt der volumetrischen Füllung in der Werkzeugkavität automatisch zu ermitteln.

Die bestehenden Verfahren basieren in der Regel auf der Messung des Innendrucks, Beispielsweise wird der "Knickpunkt" zwischen der Einfüll- und der Nachdruckphase, der sich automatisch ergibt, mit Hilfe künstlicher Intelligenz ermittelt.

In der Praxis hat sich allerdings ergeben, dass sich aufgrund der Rechenzeiten zum Teil zu grosse Verzögerungen ergeben, welche automatisch Druckspitzen und Verspannungen im Formteil nach sich ziehen. Ausserdem können nicht alle Anwendungen universell abgedeckt werden.

In einem weiteren Verfahren werden die Druckdifferenzen zwischen zwei Werkzeuginnendrucksensoren ermittelt und deren Verlauf über der Zeit analysiert. über einen plötzlichen Abfall des Signals (= Knickpunkterkennung) wird die volumetrische Füllung ermittelt.

Beide oben beschriebenen Verfahren benötigen relativ teure Sensorik und Elektronik und sind nicht prozessicher.

Aus der DE 198 03 352 A ist ein Verfahren zur Ermittlung des Zeitpunktes eines Druckanstiegs in einer Werkzeugform bekannt, wobei als Folge des Druckanstieges von dem Einspritzdruck auf den Nachdruck umgeschaltet wird. Dabei wird der Druckanstieg nicht mittels Drucksensoren, sondern mittels Temperatursensoren ermittelt.

Der vorliegenden Erfindung liegt die Aufgabe zu Grunde, ein Verfahren der oben genannten Art zu entwickeln, mit dem auf einfache und kostengünstige Weise und dennoch relativ genau auf die Nachdruckphase umgeschaltet wird.

Zur Lösung dieser Aufgabe führt, dass gegen Ende des Fliessweges der Schmelze die Werkzeugwandtemperatur bestimmt und der Umschaltpunkt zur Nachdruckphase bestimmt wird.

Das neue Verfahren beruht somit' auf der Messung der Werkzeuginnenwandtemperatur am Fliesswegende der Schmelze. Grundlegende Überlegung hierbei ist die Tatsache, dass theoretisch immer bei ca. 97 bis 98% des Fliessweges umgeschaltet werden soll, um aufgrund der Trägheit schliesslich die angestrebten 100% zu erreichen.

Erreicht die schmelze die Position eines entsprechenden Thermoelementes, erfolgt ein schlagartiger Signalanstieg, der ohne weitere Intelligenz, z.B. als analoges Schaltsignal, verwendet werden kann.

Da die Fliessweglänge in allen Fällen dem Werkzeugbauer bekannt ist, kann eine entsprechende Vorgabe zur Positionierung eines kostengünstigen Thermoelementes ohne irgendwelche Schwierigkeiten gemacht werden.

Das Thermoelement kann neben der Funktion der Bestimmung des Umschaltzeitpunktes noch weitere Funktionen erfüllen. Beispielweise kann mit ihm eine Regelung der Schwindung, eine temperaturabhängige Kühlzeitregelung oder auch eine automatische Balancierung der volumetrischen Füllung der Kavität erfolgen.

Beim herkömmlichen Spritzgiessverfahren wird ein zentral geregelter Schmelzefluss auf einen oder mehrere Abschnittspunkte des Spritzteils verteilt, wobei zwischen Kaltkanal- und Heisskanalsystemen unterschieden wird. Bei sogenannten Kaltkanalwerkzeugen mit mehreren Anschnittpunkten besteht grundsätzlich kaum eine Möglichkeit, den Füllvorgang in jedem einzelnen Anschnitt zu regeln, da die Kunststoffschmelze auch im Angusssystem nach jedem Zyklus auf natürliche Weise erstarrt und somit kein Einfluss auf die individuelle Füllung genommen werden kann.

In sogenannten Heisskanalsystemen besteht jedoch die Möglichkeit, den Schmelzestrom durch jeden einzelnen Anschnitt mit Hilfe eines bzw. mehrerer Einspritzkolben separat zu regeln, unabhängig, ob es sich um mehrere Anschnitte in einem Spritzteil (z.B. Stossfänger) oder mehrere Anschnitte in verschiedenen Teilen eines Werkzeuges handelt.

Ein auf dem Markt befindliches System regelt den Schmelzestrom einzelner Einspritzdüsen mit Hilfe separater Kolben, in dem der Druck im Heisskanal gemessen wird. Dieses Vorgehen erlaubt zwar jedem einzelnen Kolben, eine vorgegebene Geschwindigkeit oder analog einen vorgegebenen Schmelzestrom zu regeln. Es ist auf diese Weise jedoch nicht möglich, aufgrund von echten Messsignalen im Spritzteil selbst eine Regelung in Abhängigkeit der Spritzteilqualität zu realisieren.

Mit Hilfe eines Thermoelementes am Ende des Fliessweges kann für jeden Anschnitt bzw. für jede Heisskanaldüse die volumetrische Füllung automatisch ermittelt und der Regelvorgang so beeinflusst werden (Umschalten von Füllvorgang auf Nachdruckvorgang).

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Darstellung von Familienwerkzeugen;
Figur 2 eine schematische Darstellung, teilweise im Schnitt, eines modularen Werkzeugsystems;
Figur 3 eine schematische Darstellung von Mehrfachwerkzeugen;
Figur 4 eine schematische Darstellung eines Einfachwerkzeuges mit Mehrfachanbindung.

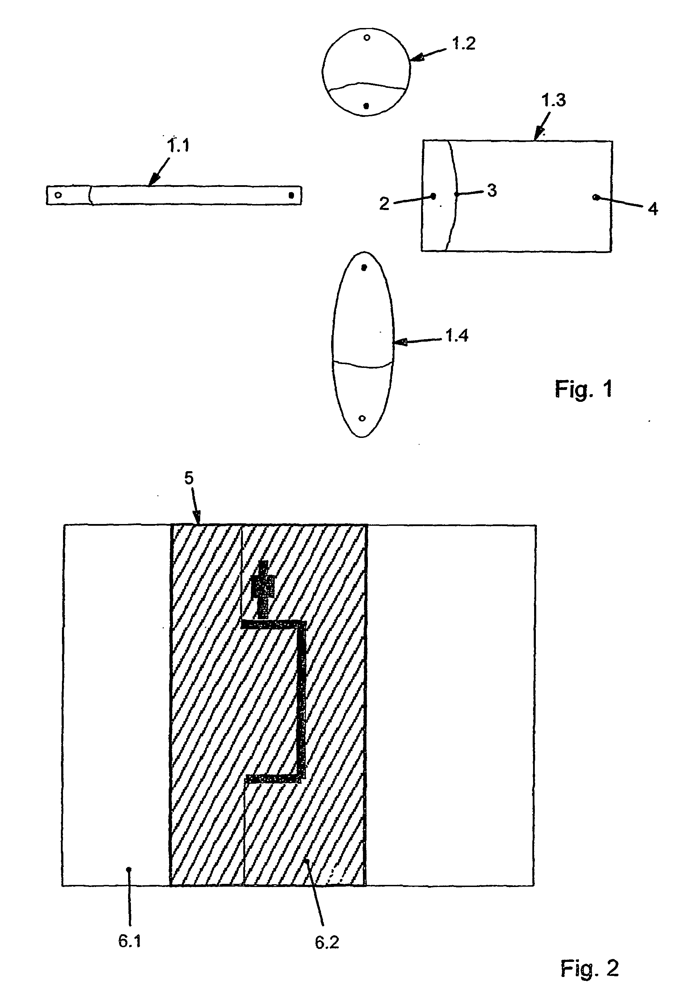

Gemäss Figur 1 ist ein Familienwerkzeug mit vier Kavitäten 1.1 bis 1.4 angedeutet. Jede Kavität 1.1 bis 1.4 besitzt eine unterschiedliche Geometrie, je nach Wunsch des Formteils.

Eine Schmelze wird durch den Anspritzpunkt 2 in die Kavität 1.1 bis 1.4 eingegeben, wobei eine Schmelzefront mit 3 gekennzeichnet ist.

Gegen Ende des Fliessweges ist jeder Kavität 1.1 bis 1.4 ein Thermoelement 4 zugeordnet.

Mit Hilfe dieser Familienwerkzeuge werden mehrere Spritzteile mit unterschiedlicher Dimension, unterschiedlichem Volumen und unterschiedlichem Gewicht hergestellt. Der Vorteil liegt vor allem darin, dass verschiedene Teile an Ort und Stelle zusammengebaut werden können. Ohne eine Regelung des Schmelzestroms der einzelnen Kavitäten 1.1 bis 1.4 bleibt die resultierende Qualität der Spritzteile jedoch dem Zufall überlassen. D.h., eine kleine Kavität, wie beispielsweise die Kavität 1.1 und 1.2 würde viel zu spät von einer Geschwindigkeitsregelung auf eine Druckregelung umschalten, was zu einer Komprimierung während der Füllphase und zu Spannungen führt. Eine grosse Kavität würde dagegen viel zu früh umschalten, wobei es zu einem Verzug der Teile und zu einem undefinierten Füllvorgang kommt.

Durch das Positionieren eines Thermoelementes 4 am Ende des jeweiligen Fliessweges wird in jeder Kavität 1.1 bis 1.4 automatisch ermittelt, wann die volumetrische Füllung erreicht wird. Gleichzeitig können auch die gemessenen Wandtemperaturen für eine weiterführende Regelung der Schwindung verwendet werden.

In Figur 2 ist ein Werkzeug 5 angedeutet, welches aus zwei Werkzeugeinsätze 6.1 und 6.2 besteht. Dabei soll die Werkzeugeinsatz 6.2 austauschbar sein.

Ein spezieller Vorteil des erfindungsgemässen Verfahrens liegt vor allem dann vor, wenn die eigentlichen Werkzeugeinsätze sehr oft gewechselt werden müssen, wie dies eben bei einem modularen Werkzeugsystem der Fall ist. In diesem Fall muss nach jedem Wechsel der Werkzeugeinsätze ein neuer Umschaltpunkt optimiert werden. Durch den Einsatz von Thermoelementen jeweils am Ende des Füllvorganges wird dieser Umschaltpunkt immer automatisch ermittelt, so dass dieser Optimierungsschritt entfällt.

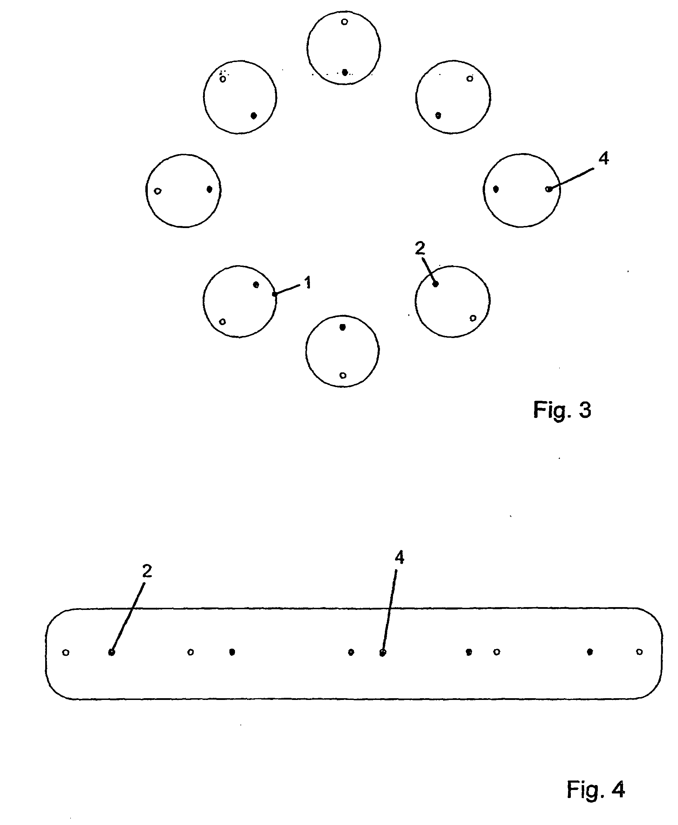

In Figur 3 ist ein Mehrfachwerkzeug mit einer Vielzahl von Kavitäten 1 angedeutet, wobei jede Kavität 1 ihren eigenen Anspritzpunkt 2 und ihr eigenes Thermoelement 4 besitzt. Das Ziel bei einem Mehrfachwerkzeug mit mehreren geometrisch identischen Kavitäten ist, den Schmelzefluss so zu regeln, dass alle Kavitäten gleichzeitig gefüllt und umgeschaltet werden. Wird ein solches Balancierungssystem nicht eingesetzt, ist es oft der Wunsch der Verarbeiter, in Abhängigkeit von einer ganz bestimmten, wählbaren Kavität umzuschalten. Auch in diesem Fall kann diese Umschaltung automatisch und wesentlich einfacher mit Hilfe eines Thermoelementes realisiert werden, wobei mit der Werkzeugwandtemperatur wiederum zusätzliche Informationen, z.B. zur Regelung der Teileschwindung, zur Verfügung stehen.

Bei einem Einfach-Werkzeug gemäss Figur 4 mit Mehrfachanbindung handelt es sich in der Regel um sehr grosse Spritzteile (z.B. Stossfänger) mit langen Fliesswegen. Die Problematik hierbei ist in der Regel nicht, einen einzigen Umschaltpunkt zu finden, sondern die Fliessfront der Schmelze bis zur volumetrischen Füllung mit Hilfe von Sensoren in der Kavität so zu regeln, dass die Heisskanaldüsen an jedem Anspritzpunkt 2 entsprechend der Programmierung gesteuert werden können. Dieses Prinzip kann mit relativ teuren Werkzeuginnendrucksensoren realisiert werden, relativ günstige Thermoelemente 4 erfüllen jedoch den gleichen Zweck. Sind die einzelnen Schmelzeströme, wie oben individuell gesteuert, gilt analog das gleiche Prinzip.

| **Positionszahlenliste** | | | | | |
|---|---|---|---|---|---|
| 1 | Kavität | 34 | | 67 | |
| 2 | Anspritzpunkt | 35 | | 68 | |
| 3 | Schmelzefront | 36 | | 69 | |
| 4 | Thermoelement | 37 | | 70 | |
| 5 | Werkzeug | 38 | | 71 | |
| 6 | Werkzeugeinsatz | 39 | | 72 | |
| 7 | | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Füllen einer Kavität (1.1-1.4) eines Werkzeuges (5) zum Herstellen eines Formteiles aus einer Schmelze, insbesondere einer Kavität (1.1-1.4) einer Spritzgiessmaschine, wobei die Schmelze unter Druck in die Kavität (1.1-1.4) eingeführt und gegen Ende oder am Ende ihres Fliessweges unter Nachdruck gesetzt wird,
**dadurch gekennzeichnet,**
**dass** gegen Ende des Fliessweges der Schmelze die Werkzeugwandtemperatur bestimmt und anhand eines Anstieges dieser Temperatur der Umschaltpunkt zur Nachdruckphase bestimmt wird.

2. Verfahren nach Anspruch 1, **dadurch gekennzeichnet, dass** die Werkzeugwandtemperatur bei etwa 97 bis 98% des Fliessweges bestimmt wird.

## Claims

1. Method of filling a cavity (1.1-1.4) of a tool (5) for producing a shaped part from a molten mass, more especially a caivity (1.1-1.4) of an injection moulding machine, the molten mass being introduced into the cavity (1.1-1.4) under pressure and being subjected to subsequent pressure towards the end of or at the end of its flow path, **characterised in that** the tool wall temperature is determined towards the end of the flow path of the molten mass, and the switchover point for the subsequent pressing phase is determined by reference to a rise in this temperature.

2. Method according to claim 1, **characterised in that** the tool wall temperature is determined at about 97% to 98 % of the flow path.

## Revendications

1. Procédé pour remplir une cavité (1.1 à 1.4) d'un moule (5) pour la fabrication d'une pièce moulée à partir d'une masse fondue, en particulier une cavité (1.1 à 1.4) d'une machine à couler les métaux sous pression, la masse fondue étant introduite sous pression dans la cavité (1.1 à 1.4) et étant mise sous compression finale vers la fin ou à la fin de son trajet de coulée,
**caractérisé en ce que**
vers la fin du trajet de coulée de la masse fondue est déterminée la température de paroi de moule et que le point de commutation à la phase de compression finale est déterminé à l'aide d'une élévation de cette température.

2. Procédé selon la revendication 1, **caractérisé en ce que** la température de paroi de moule est déterminée à environ 97 à 98 % du trajet de coulée.
